Europäisches Patentamt

European Patent Office

Office européen des brevets

(19)

(11) Veröffentlichungsnummer : **0 396 870 B1**

# (12) EUROPÄISCHE PATENTSCHRIFT

(45) Veröffentlichungstag der Patentschrift :
08.07.92 Patentblatt 92/28

(21) Anmeldenummer : 90104628.4

(22) Anmeldetag : 12.03.90

(51) Int. Cl.⁵ : **G01G 21/18,** G01G 23/02

(54) **Waage mit Ueberlastschutz.**

(30) Priorität : 09.05.89 CH 1743/89

(43) Veröffentlichungstag der Anmeldung :
14.11.90 Patentblatt 90/46

(45) Bekanntmachung des Hinweises auf die
Patenterteilung :
08.07.92 Patentblatt 92/28

(84) Benannte Vertragsstaaten :
DE FR GB

(56) Entgegenhaltungen :
DE-A- 2 830 345
DE-U- 7 935 202
US-A- 4 094 368

(73) Patentinhaber : **Mettler-Toledo AG**
**Im Langacher**
**CH-8606 Greifensee (CH)**

(72) Erfinder : **Burkhard, Hans-Rudolf**
**Sonnenhalde 13**
**CH-8603 Schwerzenbach (CH)**

EP 0 396 870 B1

Jouve, 18, rue Saint-Denis, 75001 PARIS

**Beschreibung**

Gegenstand der vorliegenden Erfindung ist eine Waage mit einer Wägezelle mit wegarmem Messwandler und einer Vorrichtung zum Schutz der Wägezelle vor dynamischer und statischer Überlastung, wobei die Schutzvorrichtung eine im Kraftfluss zwischen dem Lastangriff und der Wägezelle eingesetzte Feder und einen gehäusefesten wegbegrenzenden Anschlag aufweist.

Jede Waage ist für einen vorgegebenen Lastbereich ausgelegt, der nicht oder nur unwesentlich überschritten werden darf. Damit Waagen keinen Schaden nehmen können, sind sie meistens mit einer Ueberlastschutzvorrichtung ausgerüstet, welche aus einem Anschlag besteht, der beispielsweise eine plastische Verformung oder generell die Überschreitung eines vorgegebenen Weges des Lastaufnehmers verhindert. Solche aus einem Anschlag bestehenden Ueberlastsicherungen entfalten ihre volle Wirksamkeit, wenn die Höchstlast langsam (statisch) überschritten wird und die Wägemechanik durch die Wegbegrenzung mit dem Anschlag geschützt wird. Die Wirksamkeit eines Anschlages ist jedoch bei dynamischer Überbelastung durch z.B. das Fallenlassen einer Last auf die Waagschale nicht mehr ausreichend, weil durch die Beschleunigungskräfte die Wägemechanik in den ersten 20 bis 40 ms sowohl Zug- als auch Druckkräften ausgesetzt ist, die eine Beschädigung der Waage zur Folge haben können.

Aus dem deutschen Gebrauchsmuster 79 35 202 ist eine Überlastsicherung für eine Waage mit elektromagnetischer Lastkompensation bekannt, bei der der Lastaufnehmer unter Zwischenschaltung einer Druckfeder auf dem Gehänge abgestützt ist. Erfolgt nun eine hohe dynamische Belastung der Waagschale, dann kann der Lastaufnehmer unter Ueberwindung der Federkraft im Gehänge nach unten auf einen Anschlag gleiten, und das Gehänge mit der Wägemechanik wird vor dem eingeleiteten Schlag, d.h. vor der Primärwirkung der dynamischen Ueberlast, geschützt. Bei der Entspannung der Feder, welche in der Zeit von Millisekunden erfolgt, wird der Lastaufnehmer als Folge der Sekundärwirkung der dynamischen Ueberlast zurückgeschleudert und kann beim Anschlagen an das Gehänge Stauchschäden an Koppelgliedern oder an anderen Teilen des Wägemechanismus verursachen.

Hier will die Erfindung Abhilfe schaffen. Die Aufgabe der Erfindung besteht darin, einen Ueberlastschutz für Waagen mit einer Messzelle mit wegarmem Messwandler zu schaffen, welcher die Wägemechanik sowohl gegen die Primär- als auch gegen die Sekundärwirkung der dynamischen Ueberlast schützt.

Gelöst wird diese Aufgabe durch eine Vorrichtung, bei der in ein als Lastaufnehmer wirkendes Gehänge in Serie zur Feder ein Verbindungskörper eingesetzt ist, welcher von der Feder in Krafteinleitungsrichtung an das Gehänge angepresst gehalten und bei Krafteinwirkung vom Gehänge abhebbar angeordnet ist, wobei der Verbindungskörper mit einem Uebersetzungshebel beweglich verbunden ist.

Durch die Aufteilung der Masse des Gehänges wird erreicht, dass die empfindlichen Teile der Wägemechanik weder auf Zug noch auf Druck höher belastet werden können als deren Festigkeit unbeschadet überstehen kann. Die als Schwenkkörper ausgebildete, zwischen der Feder und dem Gehänge eingesetzte Masse, die nur einen Bruchteil der übrigen Masse des Gehänges aufweist, ermöglicht eine kompakte Ausbildung des Ueberlastschutzes, der einen Einbau innerhalb des Gehänges zulässt.

In einer besonders vorteilhaften Ausgestaltung der Erfindung ist der Verbindungskörper schwenkbar am Gehänge angelenkt. Wenn zudem die Schwenkachse in der Ebene der Auflageflächen des Verbindungskörpers am Gehänge liegt, können Biegemomente auf das System nach dem Zurückschwenken (Wegfall der Überlast) vollständig vermieden werden.

Wenn die Druckfeder oder -federn nicht nur unten durch den Verbindungskörper miteinander verbunden, sondern auch oben in einer gemeinsamen Halterung eingesetzt sind, so kann die gesamte Einheit vormontiert in das Gehäuse eingesetzt, positioniert und mit den Biegelagern verbunden werden. Eine in der Halterung angeordnete Stellschraube ermöglicht eine einwandfreie Justierung der Vorspannung der Feder(n).

Anhand von Ausführungsbeispielen wird die Erfindung näher erläutert. Es zeigen:

Figur 1 eine schematische Darstellung einer Waage mit einer Wägezelle mit wegarmem Messwandler,

Figur 2 eine Ansicht des Gehänges in einer ersten Ausführungsform,

Figur 3 eine Ansicht eines Gehänges in einer zweiten Ausführungsform,

Figur 4 einen Schnitt durch Linie IV-IV in Figur 3,

Figur 5 wie Figur 4, jedoch Verbindungskörper ausgeschwenkt, und

Figur 6 einen Schnitt längs Linie V-V in Figur 3.

Das strichpunktiert angedeutete Waagengehäuse 1 umschliesst die Wägemechanik und -elektronik 3 sowie das pauschal mit 9 bezeichnete Waagengestell. Im Waagengestell 9 ist über Lenker 11 und Lager 13 ein als Lastaufnehmer wirkendes Gehänge 15 parallel geführt; ein Uebersetzungshebel (Waagebalken) 17 ist über ein Biegelager 19 an einer Konsole 21 schwenkbar aufgehängt. An seinem Ende ist er über ein Koppelglied 23 am Gehänge 15 befestigt. Nahe an seinem anderen Ende verfügt er über eine Tauchspule 25, welche in ein ortsfestes Permanentmagnetsystem bekannter Art eintaucht, das der besseren Übersichtlichkeit halber nicht dargestellt ist. Eine Fahne 27 symbolisiert eine konventionelle Positionsabtastung. Die Waageschale 28 ist auf dem Gehänge 15 aufgesetzt.

Im Gehänge 15 ist ein Verbindungskörper 31 eingesetzt, welcher von oben durch eine Druckfeder 33 an eine Auflagefläche 35 am Gehänge 15 angepresst wird. Am Verbindungskörper 31 ist seitlich die Koppel 23 befestigt, welche die Vertikalbewegung vom Gehänge 15 auf den Übersetzungshebel 17 überträgt.

Die Masse des Verbindungskörpers 31 beträgt vorzugsweise nur etwa zehn Prozent der Masse des Gehänges 15.

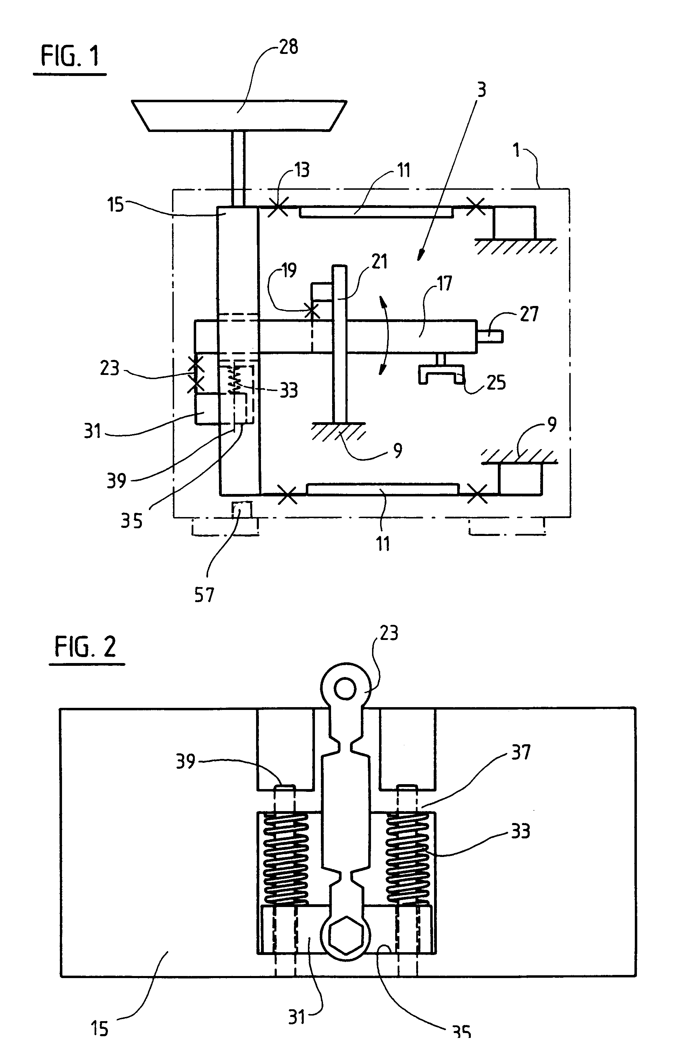

Der Verbindungskörper 31 ist - wie in Fig. 2 deutlich erkennbar ist - mittels zwei vertikal zwischen der Auflagefläche 35 und einer oberen Abstützung 37 eingesetzten Führungsbolzen 39 längsverschieblich geführt. Die beiden Druckfedern 33 können ebenfalls auf den Führungsbolzen 39 geführt sein und werden zwischen der oberen Abstützung 37 und dem Verbindungskörper 31 vorgespannt gehalten.

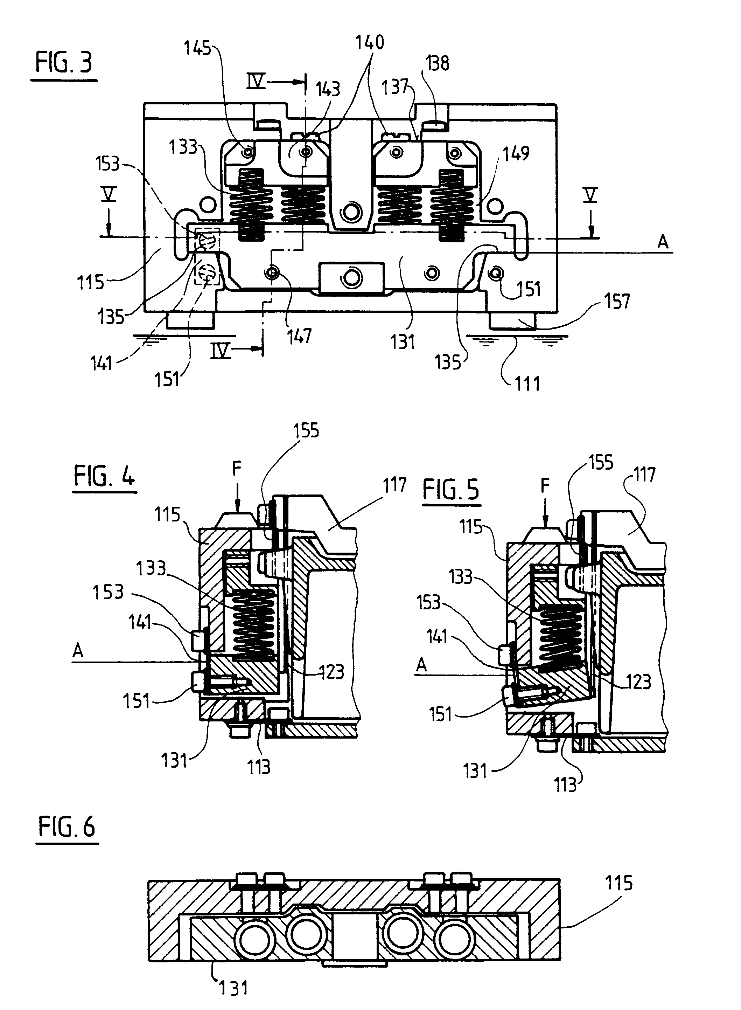

In einer weiteren vorteilhaften Ausgestaltung der Erfindung gemäss den Figuren 3 bis 5 ist der Verbindungskörper 131 mittels zweier Biegelager 141 mit dem Gehänge 115 schwenkbar verbunden. Vier Schraubenfedern 133 sind zwischen dem Verbindungskörper 131 und der oberen Abstützung 137 eingespannt gehalten. Die Federn 133 können direkt an der oberen Abstützung 137 anliegen oderwie in den Figuren 3 und 4 dargestellt - in einer Halterung 143 gehalten sein, welche mit Bohrungen 145 versehen ist, die den Eingriff eines Montagewerkzeuges für eine einfache Vorspannung und Montage uns Positionierung innerhalb des Gehänges 115 gewährleistet.

Der Verbindungskörper 131 liegt in dieser Ausbildung der Erfindung auf zwei in einem Abstand angeordneten Auflageflächen 135 auf, die sich seitlich der aussenliegenden Federn 133 befinden und zudem in der gleichen Ebene A liegen wie die Biegelinien der Biegelager 141 (vgl. Fig. 3/4).

Der Verbindungskörper 131, die Druckfedern 133, deren Zahleins, zwei oder vier - von der Nennlast und dem Aufbau der Waage abhängig ist, sowie die Halterung 143, sofern vorhanden, befinden sich vollständig innerhalb der Konturen des Gehänges 115. Die Überlastschutzvorrichtung kann daher gegebenenfalls in bestehenden Waagenaufbauten eingesetzt werden.

Zum Einsetzen der Vorrichtung in das Gehänge 115 wird letztere in einer Montagevorrichtung (keine Abbildung) vorgespannt und durch Stifte, die einerseits in die Bohrungen 145 an der Halterung 143 sowie Bohrungen 147 am Verbindungskörper 131 eingreifen, gehalten. Nach dem Einführen der Vorrichtung in das Gehänge 115 kann die Vorspannung aufgehoben werden und eine Verklemmung zwischen den Auflageflächen 135 und den oberen Abstützungen 137 erfolgen. Mit einer oder mehreren Stellschrauben 140 kann die Vorspannung der Druckfedern 133 zudem eingestellt und dadurch die Überlast-Schutzvorrichtung an den Wägebereich der Waage angepasst werden. Mit den Schrauben 138 wird die Halterung 143 am Gehänge 115 befestigt.

Nach dem Einsetzen der Schutzvorrichtung können die Biegelager 141 mit Schrauben 151 am Verbindungskörper 131 und mit Schrauben 153 am Gehänge 115 befestigt werden. Das Koppelglied 123 ist auf der dem Biegelager 141 abgewendeten Seite des Zwischenkörpers 131 befestigt. In Figur 3 ist das Biegelager 141 nur auf einer Seite in gebrochenen Linien angedeutet.

Nebst den Anordnungen des Biegelagers 141 und des Koppelgliedes 123 ist in Figur 4 auch das Stehlager 155 dargestellt, welches die von dem während des Wägevorganges auf Zug belasteten Koppelglied 123 eingeleitete Kraft auf den Übersetzungshebel 117 überträgt. Der obere Lenker mit dem oberen Biegelager 113 ist im Schnitt IV-IV nicht sichtbar.

An der Unterkante des Gehänges 115 sind Anschläge 157 angeordnet, welche den Weg des Gehänges 115 begrenzen und bei Eintreten einer Überlast am Gehäuse 111 anzuliegen kommen.

Im folgenden wird die Funktionsweise der Ueberlastschutzvorrichtung anhand einer frei auf die Waagschale fallenden Last, deren Gewicht auch kleiner als das maximal zulässige der Waage sein kann, beschrieben.

Beim Auftreffen der Last wird der Impuls von der Waagschale über das Gehänge 15,115 als Zugkraft auf das Koppelglied 23,123 und von diesem auf den Übersetzungshebel 17,117 übertragen. Die im Kraftfluss angeordnete Feder 33,133 speichert einen Teil der eingeleiteten Energie, so dass der Impuls wesentlich gedämpft auf den Verbindungskörper 31,131 und von diesem auf das Koppelglied 23,123 und den Übersetzungshebel 17,117 übertragen wird. Der Verbindungskörper 31,131 wird während der dynamischen Krafteinleitung von der Auflagefläche 35,135 abgehoben und, im Fall des zweiten Beispieles, gleichzeitig verschwenkt (Fig.5). Die Verschwenkung des Verbindungskörpers 131 (in Figur 5 Verschwenkung übertrieben dargestellt) erfolgt um eine imaginäre Achse im Biegelager 141. Durch die Verschwenkung wird der Verbindungskörper 131 schräggestellt und die Federn 133 werden zusammengedrückt. Das Koppelglied 123 wird folglich nur um den Betrag, der sich aus dem Weg des Gehänges 115 abzüglich des Weges des Verbindungskörpers 131 an der Verbindungsstelle mit dem Koppelglied 123 zusammensetzt, gedämpft bewegt.

Die in der Feder 33,133 gespeicherte Energie drängt den Verbindungkörper 31,131 sofort wieder in die Ruhelage zurück, wobei der Verbindungskörper 31,131 auf den Auflageflächen 35,135 am Gehänge 15,115 aufschlägt. Die im Verhältnis zur Masse des Gehänges 15,115 wesentlich kleinere Masse des Körpers 31,131 vermag das Gehänge 15,115 beim Aufschlag nur in äusserst geringem Umfang zu beschleunigen, so dass der Rückfahrweg des letzteren vernachlässigbar klein gehalten werden kann. Eine schädliche Stauchbelastung des Koppelgliedes 23,123 und des Stehlagers 155 durch den Aufschlag des Verbindungskörpers 31,131 auf das Gehänge 15,115 kann vermieden werden.

Die bei herkömmlichen Überlastschutzvorrichtungen auftretenden Stauchkräfte auf die Biegelager und/oder Koppelglieder sind folglich vernachlässigbar klein.

**Patentansprüche**

1. Waage mit einer Wägezelle mit wegarmem Messwandler und einer Vorrichtung zum Schutz der Wägezelle vor dynamischer und statischer Ueberlastung, wobei die Schutzvorrichtung eine im Kraftfluss zwischen dem Lastangriff und der Wägezelle eingesetzte Feder (33, 133) und einen gehäusefesten wegbegrenzenden Anschlag (57, 111) aufweist, dadurch gekennzeichnet, dass in ein als Lastaufnehmer wirkendes Gehänge (15, 115) in Serie zur Feder (33, 133) ein Verbindungskörper (31, 131) eingesetzt ist, welcher von der Feder (33, 133) in Krafteinleitungsrichtung (F) an das Gehänge (15, 115) angepresst gehalten und bei Krafteinwirkung vom Gehänge (15, 115) abhebbar angeordnet ist und dass der Verbindungskörper (31, 131) mit einem Uebersetzungshebel (17, 117) beweglich verbunden ist.

2. Waage nach Anspruch 1, dadurch gekennzeichnet, dass die Feder (33, 133) und der Verbindungskörper (31, 131) in einer Ausnehmung (49, 149) innerhalb der Konturen des Gehänges (15, 115) eingesetzt sind.

3. Waage nach einem der Ansprüche 1 oder 2, dadurch gekennzeichnet, dass der Verbindungskörper (31) und/oder die Feder (33) entlang mindestens eines Führungsbolzens (39) verschiebbar gelagert ist.

4. Waage nach einem der Ansprüche 1 oder 2, dadurch gekennzeichnet, dass der Verbindungskörper (131) schwenkbar am Gehänge (115) angelenkt ist.

5. Waage nach Anspruch 4, dadurch gekennzeichnet, dass der Verbindungskörper (131) durch mindestens ein Biegelager (141) mit dem Gehänge (115) verbunden ist.

6. Waage nach einem der Ansprüche 1, 2, 4 oder 5, dadurch gekennzeichnet, dass der Verbindungskörper (131) mit seinen Enden auf in seitlichem Abstand angebrachten Auflageflächen (135) abgestützt ist.

7. Waage nach Anspruch 6, dadurch gekennzeichnet, dass die Biegelinie des Biegelagers (41, 141) in der durch die Auflageflächen (35, 135) gebildeten Ebene (A) liegt.

8. Waage nach einem der Ansprüche 1 bis 7, dadurch gekennzeichnet, dass die Feder oder die Federn (33, 133) oben in einer Halterung (43, 143) eingreifen, welche an der oberen Abstützung (37, 137) anliegt.

9. Waage nach Anspruch 8, dadurch gekennzeichnet, dass die Feder oder die Federn (33, 133) durch mindestens eine Stellschraube (140) vorspannbar sind.

10. Waage nach einem der Ansprüche 8 oder 9, dadurch gekennzeichnet, dass die Verbindungskörper (31, 131) und die Halterung (143) Mittel (145; 147) zur Aufnahme in eine Montagevorrichtung und zum Vorspannen aufweisen.

**Claims**

1. A weighing apparatus with a weighing cell with a short-travel measuring transducer and an arrangement for protecting the weighing cell from dynamic and static overloading, wherein the protective arrangement has a spring (33, 133) fitted in the flow of force between the application of load and the weighing cell and a travel-limiting abutment (57, 111) which is fixed with respect to the housing, characterised in that a connecting body (31, 131) is fitted into a suspension member (15, 115) which acts as a load receiving member in series with the spring (33, 133), which connecting member is held pressed against the suspension member (15, 115) by the spring (33, 133) in the direction (F) of application of force and is arranged to be lifted off the suspension member (15, 115) when the force takes effect, and that the connecting body (31, 131) is movably connected to a transmission lever (17, 117).

2. A weighing apparatus according to claim 1 characterised in that the spring (33, 133) and the connecting body (31, 131) are fitted in an opening (49, 149) within the contours of the suspension member (15, 115).

3. A weighing apparatus according to one of claims 1 and 2 characterised in that the connecting body (31) and/or the spring (33) is mounted displaceably along at least one guide pin (39).

4. A weighing apparatus according to one of claims 1 and 2 characterised in that the connecting body (131) is connected pivotably to the suspension member (115).

5. A weighing apparatus according to claim 4 characterised in that the connecting body (131) is connected to the suspension member (115) by at least one bending mounting (141).

6. A weighing apparatus according to one of claims 1, 2, 4 and 5 characterised in that the connecting body (131) is supported by its ends on contact surfaces (135) which are disposed at a lateral spacing.

7. A weighing apparatus according to claim 6 characterised in that the bending line of the bending mounting (41, 141) lies in the plane (A) formed by the contact surfaces (35, 135).

8. A weighing apparatus according to one of claims 1 to 7 characterised in that the spring or springs (33, 133) engage at the top in a holding means (43, 143) which bears against the upper support means (37, 137).

9. A weighing apparatus according to claim 8 characterised in that the spring or springs (33, 133) can be prestressed by means of at least one adjusting screw (140).

10. A weighing apparatus according to one of claims 8 and 9 characterised in that the connecting bodies (31, 131) and the holding means (143) have means (145; 146) for being received in an assembly arrangement and for prestressing purposes.

**Revendications**

1. Balance comprenant une cellule de pesée équipée d'un convertisseur de mesure à faible course et d'un dispositif de protection de la cellule de pesée contre les surcharges dynamique et statique, le dispositif de protection comprenant un ressort (33, 133) placé sur la ligne de force entre le point d'attaque de la charge et la cellule de pesée, ainsi qu'une butée (57, 111) de limitation de la course qui est solidaire du boîtier, caractérisée en ce qu'un corps de liaison (31, 131) monté en série avec le ressort (33, 133) dans une suspension (15, 115) assumant la fonction d'un récepteur de charge est disposé de manière à être maintenu serré par le ressort (33, 133) contre la suspension (15, 115) dans le sens (F) de propagation de la force et de manière à pouvoir se soulever de la suspension (15, 115) sous l'action de la force, et en ce que le corps de liaison (31, 131) est relié à un levier de transmission (17, 117) de manière à être mobile avec lui.

2. Balance selon la revendication 1, caractérisée en ce que le ressort (33, 133) et le corps de liaison (31, 131) sont logés dans une cavité (49, 149) à l'intérieur des contours de la suspension (15, 115).

3. Balance selon l'une des revendications 1 ou 2, caractérisée en ce que le corps de liaison (31) et/ou le ressort (33) sont montés mobiles le long d'au moins une broche de guidage (39).

4. Balance selon l'une des revendications 1 ou 2, caractérisée en ce que le corps de liaison (131) est articulé sur la suspension (115) de manière à pouvoir pivoter.

5. Balance selon la revendication 4, caractérisée en ce que le corps de liaison (131) est relié à la suspension (115) par au moins un support fléchissant (141).

6. Balance selon l'une des revendications 1, 2, 4 ou 5, caractérisée en ce que le corps de liaison (131) repose par ses extrémités sur des surfaces d'appui (135) placées latéralement à distance l'une de l'autre.

7. Balance selon la revendication 6, caractérisée en ce que la ligne de flexion du support fléchissant (41, 141) est située dans le plan (A) formé par les surfaces d'appui (35, 135).

8. Balance selon l'une des revendications 1 à 7, caractérisée en ce que le ressort ou les ressorts (33, 133) pénètrent en haut dans un élément de fixation (43, 143) qui est appliqué contre l'élément supérieur de retenue (37, 137).

9. Balance selon la revendication 8, caractérisée en ce que le ressort ou les ressorts (33, 133) peuvent être mis sous précontrainte par au moins une vis de réglage (140).

10. Balance selon l'une des revendications 8 ou 9, caractérisée en ce que le corps de liaison (31, 131) ainsi que l'élément de fixation (143) comprennent des moyens (145 ; 147) de logement dans un dispositif de montage et de mise sous précontrainte.

FIG. 1

FIG. 2

FIG. 3

FIG. 4

FIG. 5

FIG. 6